# EUROPEAN PATENT SPECIFICATION

(11) **EP 4 154 635 B1**
(45) Date of publication and mention of the grant of the patent: **11.02.2026**
(21) Application number: 20941036.4
(22) Date of filing: 19.06.2020
(51) Int. Cl.: H04W 72/04, H04W 16/28, H04B 7/06, H04B 7/08, H04W 72/044, H04W 76/27

(54) **BEAM-SWITCHING FOR USER EQUIPMENT IN INACTIVE STATE WITH CONFIGURED GRANTS**
STRAHLUMSCHALTUNG FÜR BENUTZERGERÄT IM INAKTIVEN ZUSTAND MIT KONFIGURIERTEN BERECHTIGUNGEN
COMMUTATION DE FAISCEAU POUR UN ÉQUIPEMENT UTILISATEUR DANS UN ÉTAT INACTIF AVEC DES AUTORISATIONS CONFIGURÉES

(43) Date of publication of application: 29.03.2023
(73) Proprietor: ZTE Corporation, Shenzhen, Guangdong 518057 (CN)
(72) Inventor: ZOU, Wei, Shenzhen, Guangdong 518057 (CN); HUANG, He, Shenzhen, Guangdong 518057 (CN); TIAN, Li, Shenzhen, Guangdong 518057 (CN)
(74) Representative: Vossius & Partner Patentanwälte Rechtsanwälte mbB
(86) International application number: PCT/CN2020/097165
(87) International publication number: WO 2021/253422

(56) References cited:
- EP-A1- 3 525 516
- WO-A1-2019/029709
- WO-A1-2019/139349
- WO-A1-2020/067985
- CN-A- 108 377 538
- US-A1- 2017 207 843
- US-A1- 2020 120 482
- SONY: "Discussion on delay-tolerant HARQ for NTN", 3GPP DRAFT; R1-1912349, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823366

## Description

### TECHNICAL FIELD

The disclosure relates generally to wireless communications, including but not limited to systems and methods for performing beam-switching for user equipment in inactive state using configuration grants.

### BACKGROUND

The standardization organization Third Generation Partnership Project (3GPP) is currently in the process of specifying a new Radio Interface called 5G New Radio (5G NR) as well as a Next Generation Packet Core Network (NG-CN or NGC). The 5G NR will have three main components: a 5G Access Network (5G-AN), a 5G Core Network (5GC), and a User Equipment (UE). In order to facilitate the enablement of different data services and requirements, the elements of the 5GC, also called Network Functions, have been simplified with some of them being software based so that they could be adapted according to need.

US 2017/207843 A1, EP 3 525 516 A1 and WO 2019/029709 A1 are related prior art documents.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional. The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

At least one aspect is directed to a system, method, apparatus, or a computer-readable medium. A wireless communication node may send a beam switching configuration for a configured grant to a wireless communication device. The wireless communication node may determine a threshold for beam switching. The wireless communication node may detect, when the wireless communication device is in a radio resource control (RRC) inactive state, that a quality of a beam received via the configured grant is below the threshold.

In some embodiments, the beam switching configuration comprises at least one of: an indication to support beam switching for each of a plurality of configured grants or for the plurality of configured grants at the wireless communication device; an indication to maintain each of the plurality of configured grants or the plurality of configured grants at the wireless communication device when the wireless communication device is in the RRC inactive state; or the threshold for the beam switching for each of the plurality of configured grants or for the plurality of configured grants at the wireless communication device.

In some embodiments, the wireless communication node may send the beam switching configuration to the wireless communication device via at least a RRC message or an information element (IE) for a configured grant configuration in a RRC message. In some embodiments, the wireless communication node may send, responsive to the quality of the beam being below the threshold, a request to the wireless communication device to perform beam switching. In some embodiments, the request to perform beam switching may include an indication that the quality of the beam is below the threshold.

In some embodiments, the wireless communication node may receive, from the wireless communication device, at least one of: an indication of an synchronization signal block (SSB) having best quality amongst a plurality of SSBs, or time information for the wireless communication device to perform the beam switching. In some embodiments, the wireless communication node may send, to the wireless communication device, a confirmation in response to the received indication of the SSB having the best quality. In some embodiments, the wireless communication node may receive uplink data via the configured grant using a new receiving beam corresponding to the received indication of the SSB having the best quality.

In some embodiments, the wireless communication node may send, responsive to the quality of the new beam satisfying the threshold, an indication to keep the new beam. In some embodiments, the indication to keep the new beam may include an indication that the quality of the new beam satisfies the threshold. In some embodiments, the wireless communication node may receive, from the wireless communication device, a confirmation in response to the indication to keep the new beam.

In some embodiments, the beam switching configuration comprises at least one of: an indication to support beam switching for each of a plurality of configured grants or for the plurality of configured grants at the wireless communication device; a configuration for sounding reference signal (SRS), containing at least information on one or more sets of SRS resources, for each of the plurality of configured grants or for the plurality of configured grants at the wireless communication device; an indication to maintain each of the plurality of configured grants, or the plurality of configured grants at the wireless communication device, when the wireless communication device is in the RRC inactive state; or a threshold for the beam switching for each of the plurality of configured grants or for the plurality of configured grants at the wireless communication device.

In some embodiments, the wireless communication node may send, to the wireless communication device, a request for activation of a plurality of SRS resources at the wireless communication device that is in inactive state. In some embodiments, the wireless communication node may send, to the wireless communication device, the request in response to the quality of the beam received via the configured grant being below the threshold.

In some embodiments, the wireless communication node may receive, from the wireless communication device, the plurality of SRSes. In some embodiments, the wireless communication node may send, to the wireless communication device when the wireless communication device is in the RRC inactive state, an indication of a SRS having best quality amongst the plurality of SRSes. In some embodiments, the wireless communication node may receive from the wireless communication device, a confirmation for the indication of the SRS having the best quality.

In some embodiments, the wireless communication node may send, to the wireless communication device, a message to deactivate SRS at the wireless communication device which is in inactive state. In some embodiments, the wireless communication node may send, to the wireless communication device, the message to deactivate SRS, in response to a quality of a new beam received via the configured grant being higher than the threshold.

At least one aspect is directed to a system, method, apparatus, or a computer-readable medium. A wireless communication device may receive, from a wireless communication node, a beam switching configuration for a configured grant. The wireless communication device may perform, when in a radio resource control (RRC) inactive state, beam switching via the configured grant.

In some embodiments, the beam switching configuration comprises at least one of: an indication to support beam switching for each of a plurality of configured grants or for the plurality of configured grants at the wireless communication device; an indication to maintain each of the plurality of configured grants or the plurality of configured grants at the wireless communication device when the wireless communication device is in the RRC inactive state; or a threshold for beam switching for each of the plurality of configured grants or for the plurality of configured grants at the wireless communication device.

In some embodiments, the wireless communication device may receive the beam switching configuration from the wireless communication device via at least a RRC message or an information element (IE) for a configured grant configuration in a RRC message. In some embodiments, the wireless communication device may receive, from the wireless communication device responsive to the quality of the beam being below a threshold of the wireless communication node for beam switching, a request to perform beam switching. In some embodiments, the request to perform beam switching may include an indication that the quality of the beam is below the threshold.

In some embodiments, the wireless communication device may send, to the wireless communication node prior to performing the beam switching, at least one of: an indication of an synchronization signal block (SSB) having best quality amongst a plurality of SSBs, or time information for the wireless communication device to perform the beam switching. In some embodiments, the wireless communication device may receive, from the wireless communication node, a confirmation in response to the indication of the SSB having the best quality. In some embodiments, the wireless communication device may send, using a new transmission beam corresponding to the indication of the SSB having the best quality, uplink data via the configured grant to the wireless communication node.

In some embodiments, the wireless communication device responsive to the quality of the new beam satisfying a threshold of the wireless communication node for beam switching, an indication to keep the new beam. In some embodiments, the indication to keep the new beam may include an indication that the quality of the new beam satisfies the threshold. In some embodiments, the wireless communication device may send, to the wireless communication node, a confirmation in response to the indication to keep the new beam.

In some embodiments, the beam switching configuration may include at least one of: an indication to support beam switching for each of a plurality of configured grants or for the plurality of configured grants at the wireless communication device; a configuration for sounding reference signal (SRS), containing at least information on one or more sets of SRS resources, for each of the plurality of configured grants or for the plurality of configured grants at the wireless communication device; an indication to maintain each of the plurality of configured grants, or the plurality of configured grants at the wireless communication device, when the wireless communication device is in the RRC inactive state; or a threshold for the beam switching for each of the plurality of configured grants or for the plurality of configured grants at the wireless communication device.

In some embodiments, the wireless communication device that is in inactive state may receive, from the wireless communication device, a request for activation of a plurality of SRS resources at the wireless communication device. In some embodiments, the wireless communication device may receive, from the wireless communication device, the request in response to the quality of the beam sent via the configured grant being below the threshold.

In some embodiments, the wireless communication device may send, to the wireless communication node, the plurality of SRSes. In some embodiments, the wireless communication device may receive, from the wireless communication node when the wireless communication device is in the RRC inactive state, an indication of a SRS having best quality amongst the plurality of SRSes. In some embodiments, the wireless communication device may send, to the wireless communication node, a confirmation for the indication of the SRS having the best quality.

In some embodiments, the wireless communication device may receive, from the wireless communication node, a message to deactivate SRS at the wireless communication device which is in inactive state. In some embodiments, the wireless communication device may receive, from the wireless communication node, the message to deactivate SRS, in response to a quality of a new beam sent via the configured grant being higher than the threshold. In some embodiments, the wireless communication device may send, to the wireless communication node, **a confirmation in response to the message to deactivate SRS.**

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.
FIG. 1 illustrates an example cellular communication network in which techniques disclosed herein may be implemented, in accordance with an embodiment of the present disclosure;
FIG. 2 illustrates a block diagram of an example base station and a user equipment device, in accordance with some embodiments of the present disclosure;
FIG. 3 illustrates a sequence diagram of an example beam-switching procedure for configuration grants without associated sounding reference signals (SRSs);
FIG. 4 illustrates a block diagram of an example media access control (MAC) control element (CE) for receiving-quality notifications;
FIG. 5 illustrates a block diagram of an example media access control (MAC) control element (CE) for beam-switching reports;
FIG. 6 illustrates a sequence diagram of an example beam-switching procedure for configuration grants with associated sounding reference signals (SRSs); and
FIG. 7 illustrates a functional band diagram of an example method of performing beam-switching for user equipment in an inactive state using configured grants.

### DETAILED DESCRIPTION

Various example embodiments of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

The following acronyms are used throughout the present disclosure:

| Acronym | Full Name |
|---|---|
| 3GPP | 3rd Generation Partnership Project |
| 5G | 5th Generation Mobile Networks |
| 5G-AN | 5G Access Network |
| 5G gNB | Next Generation NodeB |
| AM | Acknowledged Mode |
| CG | Configuration Grant |
| CN | Core Network |
| DCCH | Dedicated Control Channel |
| DCI | Downlink Control Information |
| DL | Down Link or Downlink |
| DN | Data Network |
| IE | Information Element |
| MAC | Medium Access Control |
| MAC-CE | Medium Access Control (MAC) Control Element (CE) |
| NW | Network |
| OAM | Operations, Administration and Management |
| OFDM | Orthogonal Frequency-Division Multiplexing |
| OFDMA | Orthogonal Frequency-Division Multiple Access |
| PDCCH | Physical Downlink Control Channel |
| PDCP | Packet Data Convergence Protocol |
| PDSCH | Physical Downlink Shared Channel |
| PDU | Protocol Data Unit |
| PHY | Physical Layer |
| PUCCH | Physical uplink control channel |
| QoS | Quality of Service |
| RAN | Random Access Network |
| RB | Resource Block |
| RE | Resource Element |
| RLC | Radio Link Control |
| RS | Reference Signal |
| RSSI | Received Signal Strength Indicator |
| RSRP | Reference Signal Received Power |
| RSRQ | Reference Signal Received Quality |
| RRC | Radio Resource Control |
| SAP | Service Access Point |
| SSB | Synchronization Signal Block |
| SRI | SRS Resource Indicator |
| SRS | Sounding Reference Signal |
| TC | Transmission Configuration |
| TCI | Transmission Configuration Indicator |
| TTI | Transmission Time Interval |
| UE | User Equipment |
| UL | Up Link or Uplink |

### 1. Mobile Communication Technology and Environment

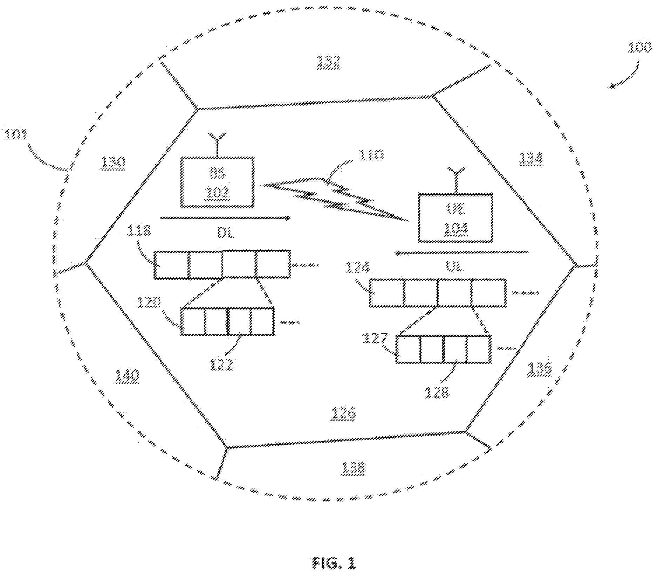

FIG. 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102"; also referred to as wireless communication node) and a user equipment device 104 (hereinafter "UE 104"; also referred to as wireless communication device) that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

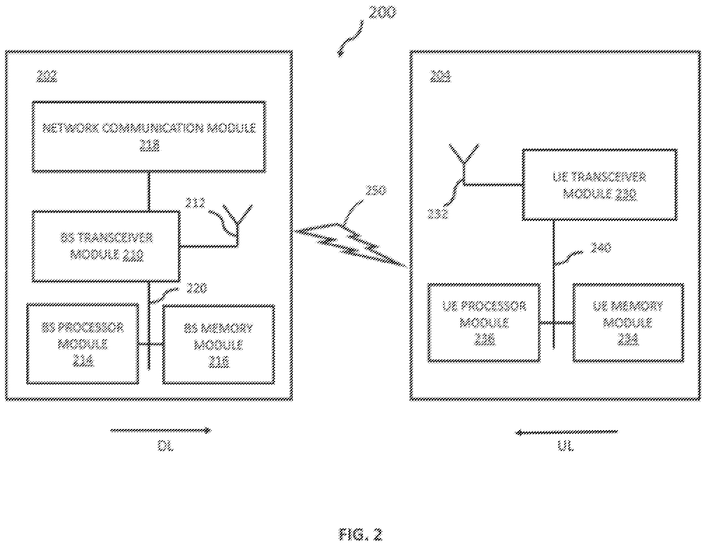

FIG. 2 illustrates a block diagram of an example wireless communication system 200 for transmitting and receiving wireless communication signals (e.g., OFDM/OFDMA signals) in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 may be coordinated in time such that the uplink receiver circuitry is coupled to the uplink antenna 232 for reception of transmissions over the wireless transmission link 250 at the same time that the downlink transmitter is coupled to the downlink antenna 212. Conversely, the operations of the two transceivers 210 and 230 may be coordinated in time such that the downlink receiver is coupled to the downlink antenna 212 for reception of transmissions over the wireless transmission link 250 at the same time that the uplink transmitter is coupled to the uplink antenna 232. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

The Open Systems Interconnection (OSI) Model (referred to herein as, "open system interconnection model") is a conceptual and logical layout that defines network communication used by systems (e.g., wireless communication device, wireless communication node) open to interconnection and communication with other systems. The model is broken into seven subcomponents, or layers, each of which represents a conceptual collection of services provided to the layers above and below it. The OSI Model also defines a logical network and effectively describes computer packet transfer by using different layer protocols. The OSI Model may also be referred to as the seven-layer OSI Model or the seven-layer model. In some embodiments, a first layer may be a physical layer. In some embodiments, a second layer may be a Medium Access Control (MAC) layer. In some embodiments, a third layer may be a Radio Link Control (RLC) layer. In some embodiments, a fourth layer may be a Packet Data Convergence Protocol (PDCP) layer. In some embodiments, a fifth layer may be a Radio Resource Control (RRC) layer. In some embodiments, a sixth layer may be a Non Access Stratum (NAS) layer or an Internet Protocol (IP) layer, and the seventh layer being the other layer.

### 2. Systems and Methods for Performing Beam-Switching for User Equipment in an Inactive State Using Configured Grants

RRC_INACTIVE state (e.g., as introduced in 3GPP NR Rel-15) may provide a power efficient state with low control-plane latency. For a UE (e.g., the UE 104) in RRC_INACTIVE state, the last serving gNB (e.g., the base station 102) may keep its context and the associated NG connections to the core network, such that all RBs could be recovered immediately after a short random access and RRC resume process on the RAN-side.

However, data transmission without state transition is not supported for the UE in RRC_INACTIVE state (e.g., under 3GPP NR Rel-15). The UE may undergo entering of RRC_CONNECTED state first and then initiate the data transmission. To realize this, a RRC resume process with considerable signaling consumption may be performed at first, even when the UE only has one small data to transmit. Hence, the data transmission without state transition for RRC_INACTIVE UE could cause high signaling overhead and large data transmission delay.

To solve these and other problems, small data transmission for RRC_INACTIVE UE may be considered (e.g., as in 3GPP Rel-17). In some embodiments, a RRC_INACTIVE UE may send one or more small data during the RRC resume process. Alternatively, a RRC_INACTIVE UE may send one or more small data in a configured grant (CG) that may be configured before the UE get into RRC_INACTIVE state. The CG-based small data transmission at a RRC_INACTIVE UE may be leveraged in the present disclosure.

In the CG-based small data transmission at a RRC_INACTIVE UE, a UE may perform its UL data transmission in a beam specified in the CG configuration. For example, a SRI may be provided in the CG configuration when UE is in RRC_CONNECTED state, and UE may use the same beam associated with the indicated SRS resource (as indicated by SRI) for UL transmission in the CG resource. On the side of gNB, a receiving beam may be applied based on the indicated UL beam.

When the UE moves to some other place, however, a new beam direction should be used. If the RRC_INACTIVE UE has the same SRS resources as the RRC_Connected UE, the legacy beam switching method may be applied where gNB use a SRI information in DCI to notify the UE of the desired beam for UL transmission. But when the RRC_INACTIVE UE does not have any SRS resource, performing the beam switching for the data transmission in a CG may differ. Although the UE may find and switch to a better beam for UL transmission based on the receptions of SSBs in different DL beams, gNB may not know that and not adjust its reception beams in UL at all.

### A. Configuration Grant (CG) Without Any Associated SRS Resource Configured by RRC

Under one approach, beam-switching may be performed without any associated SRS resource configured by RRC. First, a RSSI threshold, RSRP threshold, or RSRQ threshold may be configured in a CG configuration. The CG configuration may trigger a beam-switching process after the RSSI, RSRP, or RSRQ detected by the gNB in the CG is worse than the corresponding threshold. This threshold may be configured for each CG configuration separately, or use a common threshold for all CG configurations (e.g., for the UE for all CG configurations). In some embodiments, a beam-switching indication may be to notify the UE that beam switching action should be supported for a CG configuration. In some embodiments, the threshold may be defined also be notified for UE's information. The beam switching indication and threshold may be contained in a RRC message when a CG is configured, or when an UE is released to RRC_INACTIVE state.

Second, the gNB may notify the low-quality UL receiving state or beam switching request to UE, by MAC CE, or by DCI, when the gNB finds that the UL receiving RSSI, RSRP, RSRQ is worse than the predefined threshold. Third, the UE may measure the SSBs from gNB, and may find one or more best-quality SSBs, and can report the SSB indexes to gNB in the UL CG transmission, either by using MAC CE or DCI signaling. After that, UE may use the reverse beam associated with the reported (best-quality) SSB for its CG data transmission. The detailed time information for UE to perform the beam switching may also be provided, which could be a number of CG periods. In some embodiments, gNB may send a confirmation message to confirm the reception of SSB index. The SSB index may be delivered by either MAC CE or DCI, after gNB receive the SSB index report.

Fourth, the gNB may switch the receiving beam according to SSB index reported by UE in the following CG receiving according to the beam-switching time information if available. Fifth, if the gNB still receives data with bad RSSI, RSRP, or RSRQ after beam switching, the second step may be repeated and the UE may select another good-quality SSB to report. Otherwise, the gNB may notify a high-quality UL receiving state to UE. The receiving state may be 1-bit information in DCI or by MAC CE.

In the above process, in some embodiments, a timer may be activated at UE after performing beam switching, and may stop after receiving the notification of a second low-quality UL receiving state or a high-quality UL receiving state. If the timer expires, the UE may either recover the initial beam in the CG configuration, or may repeat the third step. In some embodiments, the gNB may also have a timer and the corresponding action in the adjustment of receiving beam in UL, which could be used to recover the initial receiving beam.

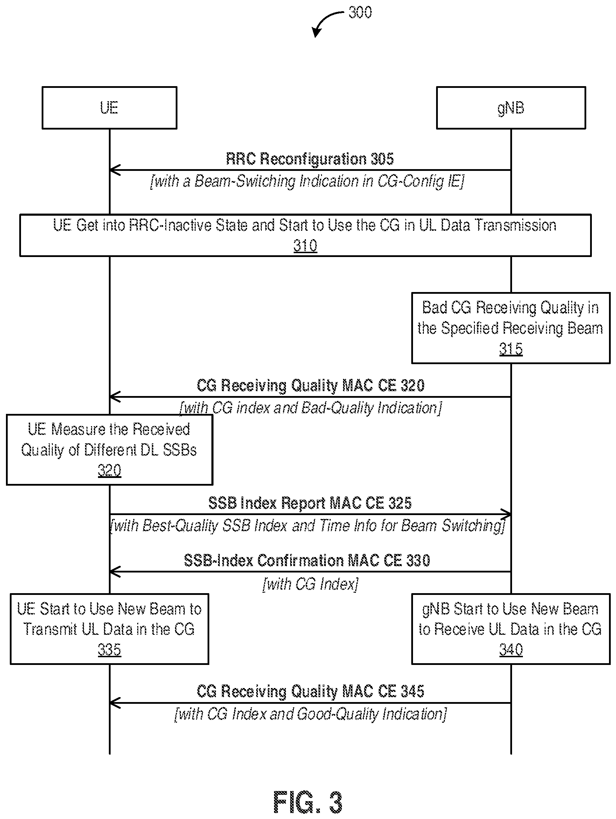

Referring now to FIG. 3, depicted is a sequence diagram of a beam-switching procedure 300 for configured grants without associated sounding reference signals (SRSs). As depicted, a gNB may configure a CG by a RRC message where a beam-switching indication is contained (305). In some embodiments, a beam-switching threshold may also be contained in the CG configuration, which could be a RSSI threshold, RSRP threshold, or RSRQ threshold. After that, UE may enter into RRC_INACTIVE state and can use the CG for UL data transmission (310). An indication may be contained in the CG configuration to indicate or ensure that the CG should be active/available when UE gets into RRC_INACTIVE state. In this case, the CG configuration should contains at least one of the following:
- a beam-switching RSSI threshold;
- a beam-switching RSRP threshold;
- a beam-switching RSRQ threshold;
- A keeping-alive indication when UE get into RRC_INACTIVE state; or
- A beam-switching indication for the CG

In some embodiments, a list of keeping-alive CG index may be contained in the SuspendConfig IE in the *RRCRelease* message. The RRCRelease message may be used by the gNB to release the UE into RRC_INACTIVE state. In this case, the SuspendConfig IE should contain at least one of the following:
- a list of keeping-alive CG index;
- the associated beam switching indication for each CG in the above list;
- the associated RSSI threshold for each CG in the above list;
- the associated RSRP threshold for each CG in the above list; or
- the associated RSRQ threshold for each CG in the above list.

The gNB may detect a poor quality in transmission(s) via the CG received using the original receiving beam (e.g., when the beam is determined to have a RSSI, RSRP, or RSRQ than the configured threshold) (315). The gNB may send a bad-receiving-quality notification to UE via MAC CE or by DCI signaling (320). The bad-receiving-quality notification MAC CE or DCI information may contain at least one of the following:
- CG index; or
- Bad quality indication, which could be used by UE to determine to perform a beam switching in UL CG transmission.

After receiving the bad-receiving-quality notification, UE may measure the receiving quality of SSBs in different DL beams (320). Once measured, the UE may report a SSB index report by using MAC CE or by UCI signaling (325). The detailed information sent via the MAC CE or UCI signaling may contain at least one of the following:
- SSB index(es) of one (or more) best-quality SSB(s); or
- time information for UE to perform/start the UL beam switching, which could be a number of CG period (or frame, slot, mini-slot, etc.) after which the associated new UL beam would be applied in UL CG transmission.
In some embodiments, the gNB may send a SSB index confirmation (in a MAC CE signal/transmission) to UE as the confirmation for the received SSB index MAC CE (330).

When the specified time arrives, the UE may switch to the reverse beam associated with the reported SSB in the UL CG data transmission (335). The gNB may also switch to a corresponding receiving beam according to the report from the UE (340). In some embodiments, a timer may be started or restarted at the UE after the UE's beam switching action.

If gNB may receive the UL data using the CG resource with a better quality than the configured RSSI, RSRP, or RSRQ threshold, the gNB may send a good-receiving-quality notification or beam-keeping request to the UE either by using MAC CE or by DCI signaling (345). The good-receiving-quality notification (sent via MAC CE or DCI signaling) can include information which may contain at least one of the following:
- CG index; or
- good quality indication, which may be used by UE to determine to continue to use the current beam in CG transmission.

In some embodiments, if the timer started or restarted after UE's beam switching action expire, the UE may repeat (320).

### I. Configured Grant Configuration Information Element

In some embodiments, some new parameters may be introduced to *ConfiguredGrantConfig* IE (e.g., as specified in 3GPP TS 38.331) to allow beam switching and RRC_INACTIVE-state CG data transmissions as follows when a CG is initially or previously configured. The *ConfiguredGrantConfig* IE may be sent from the gNB to the UE via any means (e.g., a RRC signal).

The IE *ConfiguredGrantConfig* may be used to configure uplink transmission without dynamic grant according to two possible schemes. The actual uplink grant may be configured via RRC (*type1*) or provided via the PDCCH (addressed to CS-RNTI) (*type2*)*.* Multiple Configured Grant configurations may be configured in one BWP of a serving cell. The *ConfiguredGrantConfig* information element may be, for example, of the following form:

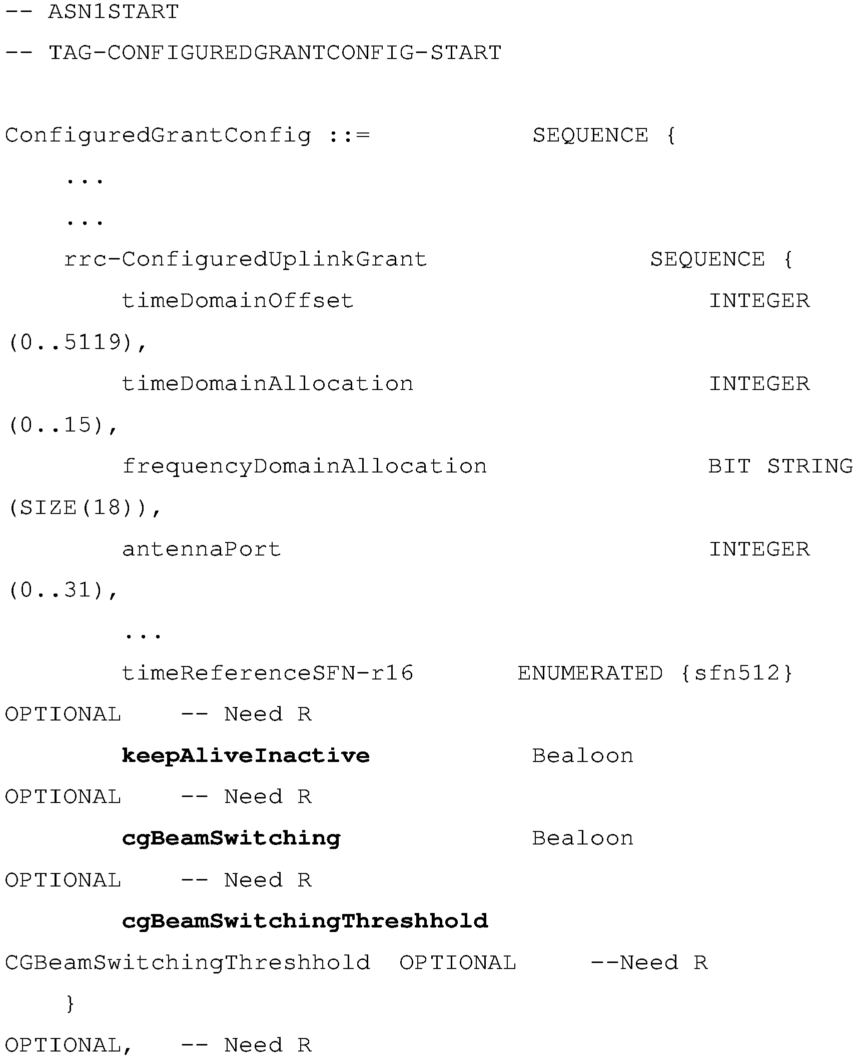

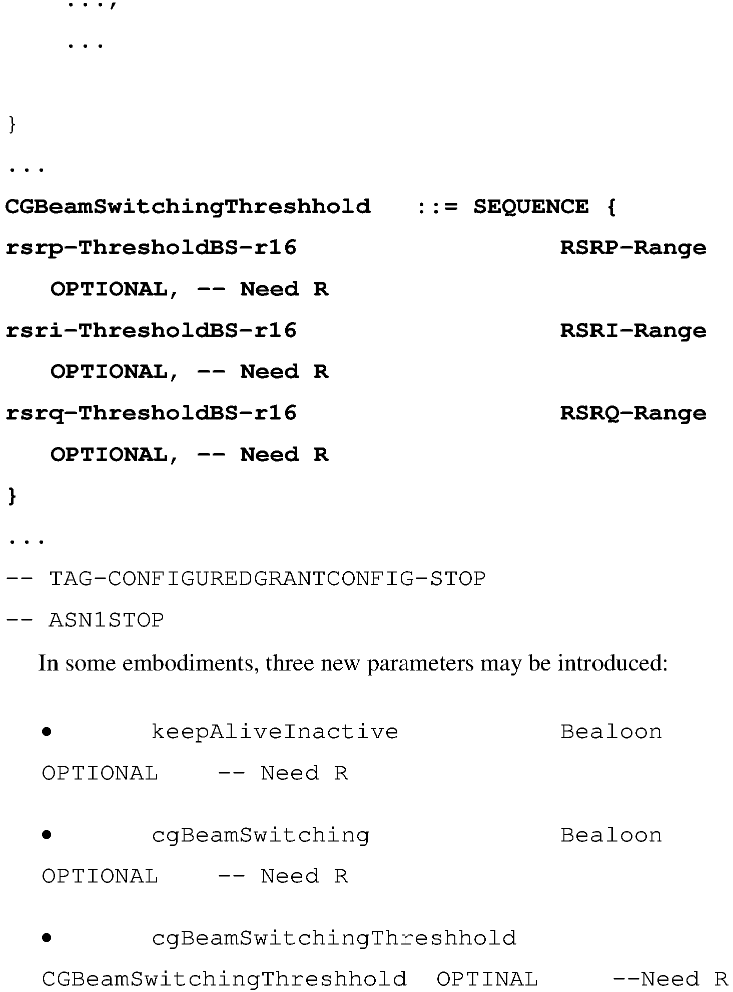

The first parameter "keepAliveInactive" may be used to indicate whether or not the CG would be kept alive (or maintained) when UE get into RRC_INACTIVE state. The second parameter "cgBeamSwitching" may be used to indicate whether or not beam switching should be supported in the configured CG when UE get into RRC_INACTIVE state. The third parameter "cgBeamSwitchingThreshhold" may be used to indicate the receiving-quality threshold for gNB to request beam switching, which could contain at least one of the following thresholds:
- a beam-switching RSSI threshold;
- a beam-switching RSRP threshold; or
- a beam-switching RSRQ threshold.

### II. RRC Release to Direct UE to Enter the RRC Inactive State

In some embodiments, parameters may be introduced to *RRCRelease* message (e.g., as specified in 3GPP TS 38.331) to allow beam switching and RRC_INACTIVE-state CG data transmissions as follows when UE is notified to enter into RRC_INACTIVE state by RRCRelease message. The *RRCRelease* message may be used to command the release of an RRC connection or the suspension of the RRC connection. In the message, the signaling radio bearer may be SRB1; the radio link control (RLC) service access point (SAP) may be in the acknowledged mode (AM); the logical channel used may be DCCH; and the direction may be from the network (e.g., gNB) to the UE. The *RRCRelease* message may be, for example, in the following form:

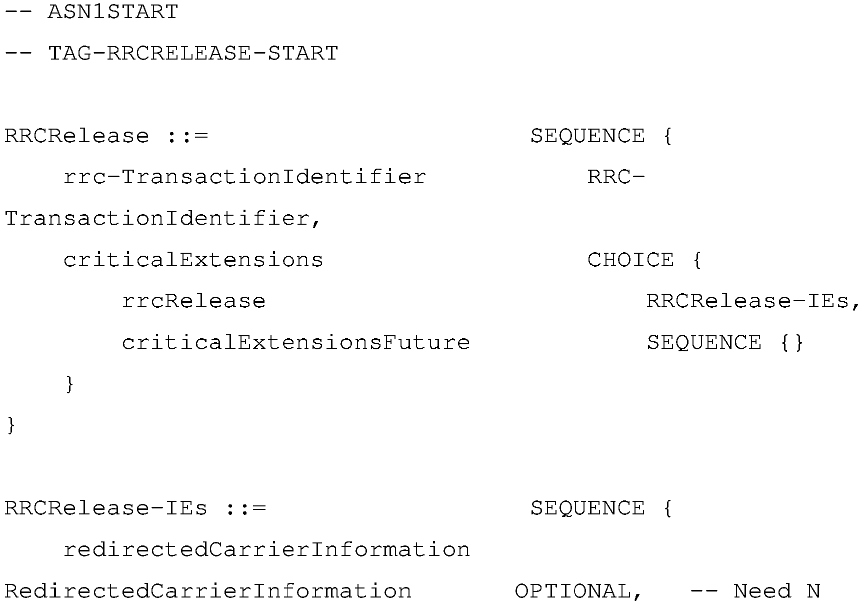

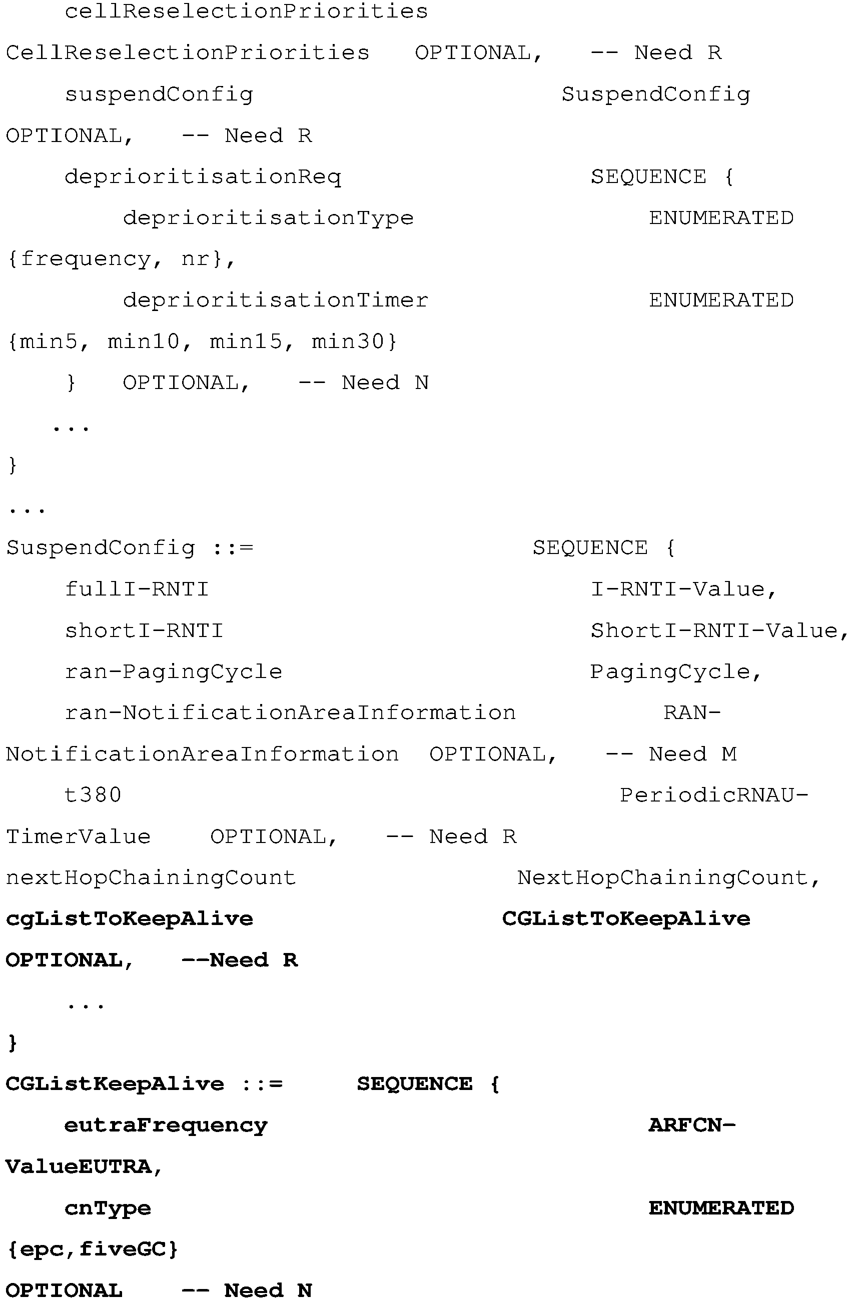

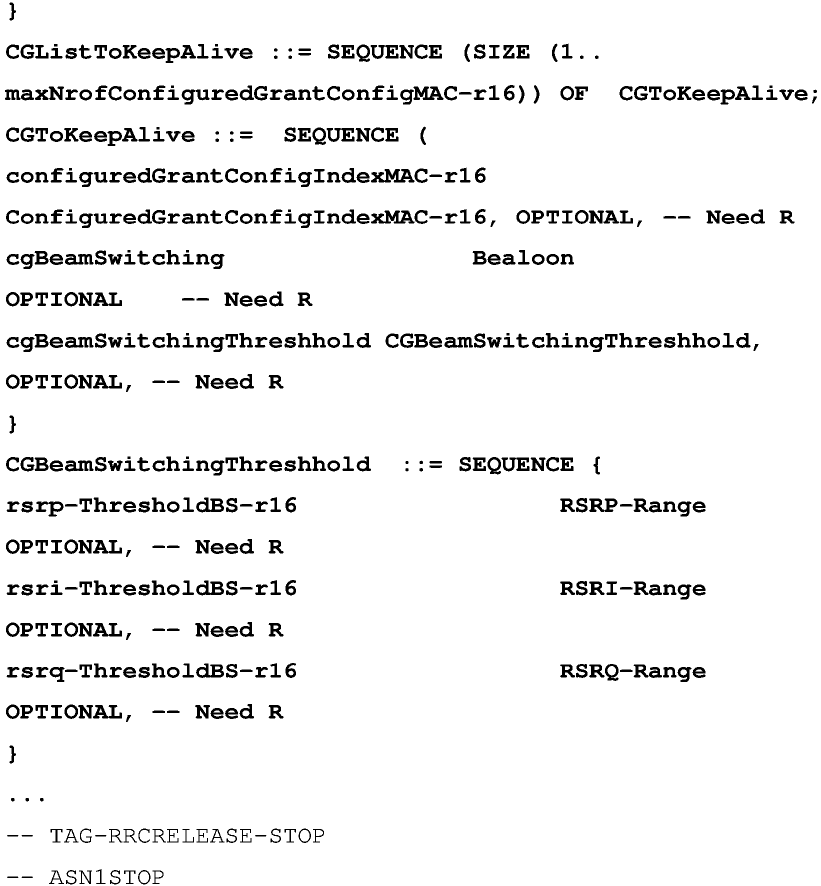

In some embodiments, a new parameter "cgListToKeepAlive" may be used to define a list of CGs to keep alive/active/available when UE get into RRC_INACTIVE state. The parameter may be contained in the RRCRelease message. In some embodiments, the new parameter may be contained in the SuspendConfig IE in the RRCRelease message.

In some embodiments, the new parameter "cgListToKeepAlive" may include a sequence of CGs to be kept alive/active/available. Each of the CGs may be defined as a "CGToKeepAlive" parameter, and contains the following three parameters:

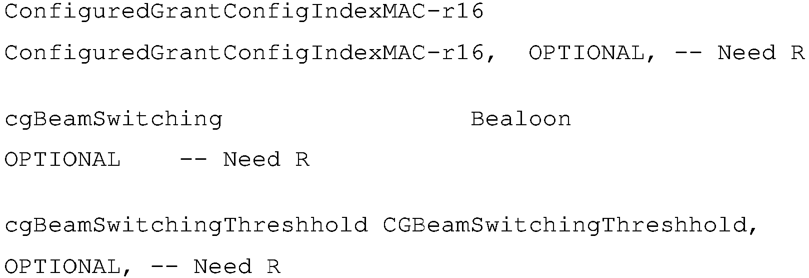

The first parameter "configuredGrantConfigIndexMAC-r16" may be used to indicate the CG index to be kept alive/active/available. The second parameter "cgBeamSwitching" may be used to indicate whether or not beam switching should be supported in the keeping-alive CG when the UE gets into RRC_INACTIVE state. The third parameter "cgBeamSwitchingThreshhold" may be used to indicate the receiving-quality threshold for gNB to request beam switching.

### III. Receiving-Quality Notification to UE

The gNB may detect a poor quality in transmission(s) via the CG received using the original receiving beam (e.g., having a RSSI, RSRP, or RSRQ worse than the configured threshold). The gNB may send a bad-receiving-quality notification or beam-switching request to the UE either by MAC CE signaling or by DCI signaling. The bad-receiving-quality notification (sent via MAC CE or DCI signaling) can include information that may contain at least one of the following:
- CG index; or
- Bad quality indication, which may be used by UE to determine to perform a beam switching in UL CG transmission.

Furthermore, if gNB receives the UL data via a CG resource with a better quality than the configured RSSI, RSRP, or RSRQ threshold, the gNB may send a good-receiving-quality notification to the UE either by MAC CE signaling or by DCI signaling. The good-receiving-quality notification (sent via MAC CE or DCI signaling) can include information that may contain at least one of the following:
- CG index; or
- good quality indication, which could be used by UE to determine to continue to use the current beam in CG transmission.

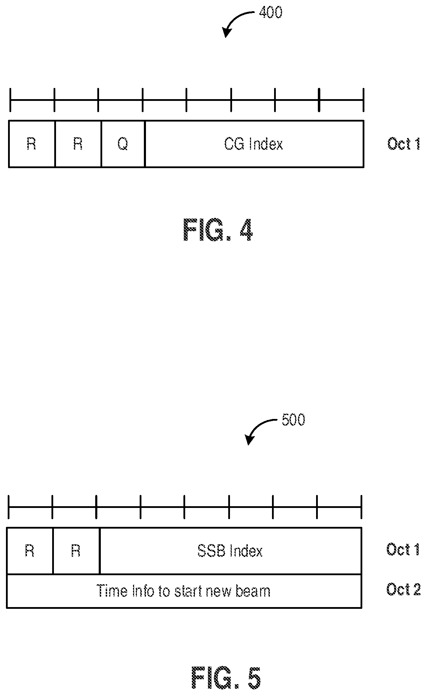

Referring now to FIG. 4, depicted is a block diagram of a media access control (MAC) control element (CE) 400 for receiving-quality notifications. As illustrated, the MAC-CE may be a fixed length MAC CE. The bit "Q" may be be used to represent bad or good receiving quality, and 5-bit CG index may be used to indicate a CG among all CGs configured at the MAC entity. Since the maximal number of CG configured in a MAC entity is 32 (e.g., as specified in 3GPP TS 38.331), a 5-bit field may be used.

### IV. Beam Switching Report to UE

If beam switching is to be performed at the UE, the UE may measure the receiving quality of SSBs in different DL beams, and report a SSB index report by MAC CE signaling or by DCI signaling. The detailed information sent via MAC CE or UCI signaling may include at least one of the following:
- SSB index(es) of one (or more) best-quality SSB(s); or
- time info for UE to perform the UL beam switching, which could be a number of CG periods after which the associated new UL beam would be applied in UL CG transmission.

Referring now to FIG. 5, depicted is a block diagram of a media access control (MAC) control element (CE) 500 for beam-switching reports. As illustrated, a 6-bit field may be used to indicate the SSB index with the best receiving quality at UE, for instance when the maximal number of SSBs is 64. In addition, the time information for the UE to perform the UL beam switching could also be specified, and the time information could specify or include a number of CG period (or frame, slot, mini-slot, etc.), for instance to indicate a time instance and/or duration for performing/initiating/completing the beam switching.

### B. Configured Grant (CG) With Associated SRS Resource Configured by RRC

Under another approach, beam-switching may be performed with an associated SRS resource configured by RRC. One or more CG-associated SRS resources for UL beam measurement in RRC_INACTIVE state may be configured by gNB in the CG configuration (or RRCRelease message). The CG-associated SRS resource sets with one or more SRS resources in each of these sets may be configured for UL beam measurement in RRC_INACTIVE state. Those CG-associated SRS resource sets may be configured by the gNB in the following RRC messages: (i) by RRC message for CG Configuration, where a CGConfig IE is contained or (ii) by RRCRelease message. The UE may use the SRS resources to transmit SRSs in different beam directions, separately after the UE enters into RRC_INACTIVE state. Then, the gNB may measure the receiving quality of different beams and indicate the expected UL transmission beam by using DCI or MAC CE signaling, similar to legacy operation in the RRC_Connected mode. Furthermore, the configured CG-associated SRS resources may be not in active state by default when the UE enters into RRC_INACTIVE state. When the gNB finds that the UL receiving quality is bad, the gNB may activate the UE by using DCI or MAC CE signaling.

If CG-associated SRS resources are configured, the UE may use the SRS resources to transmit SRSs in different beam directions, separately, after the UE enters into RRC_INACTIVE state. Then, the gNB may measure the receiving quality of different beams and may indicate the expected UL transmission beam by DCI or MAC CE, similar to operation in the RRC_Connected mode. In some embodiments, CG-associated SRS resource sets may be configured for each CG separately, or for all CGs in a UE.

In some embodiments, the SRS resources used by UE in RRC_Connected state may be directly configured to be used by a UE when the UE enters into RRC_INACTIVE state, in the following RRC messages: (i) by RRC message for CG Configuration, where a CGConfig IE is contained or (ii) by RRCRelease message. In this case, the configuration may contain a CG index and one or more IDs of the associated SRS resource sets, which have already been configured.

Furthermore, the configured CG-associated SRS resources may not be in active state upon configuration by default when the UE gets into RRC_INACTIVE state. If the gNB finds that the UL receiving quality is bad, the gNB may activate the configured CG-associated SRS resources by DCI or MAC CE. After/when/if the gNB finds that the UL receiving quality is good, the gNB may deactivate the configured CG-associated SRS resources by using DCI or MAC CE signaling.

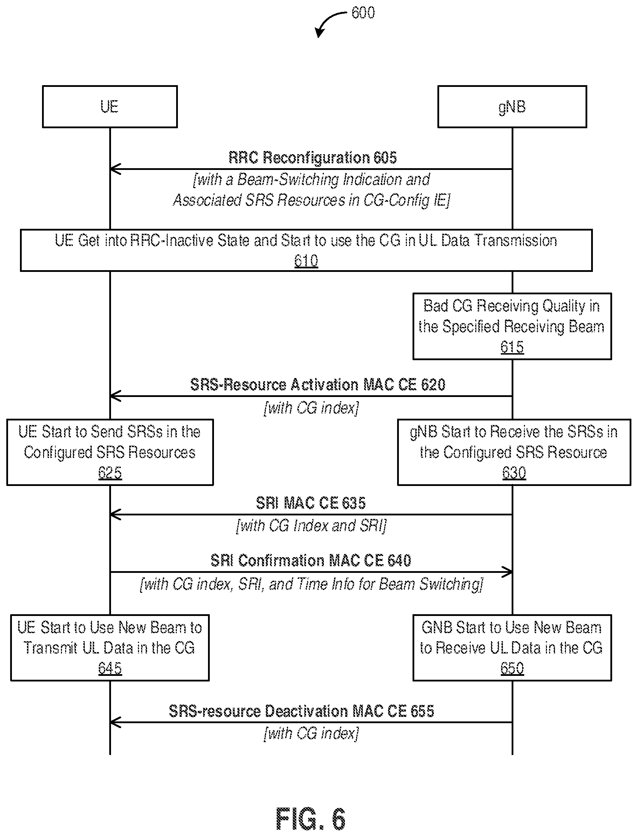

Referring now to FIG. 6, depicted is a sequence diagram of a beam-switching procedure 600 for configuration grants with associated sounding reference signals (SRSs). A gNB may configure a CG by RRC message (605). The CG configuration may include one or more SRS resource sets, and/or a beam-switching indication. In some embodiments, the CG configuration may include a beam-switching threshold. After that, the UE can enter into RRC_INACTIVE state and can use the CG for UL data transmission (610). An indication may be contained in the CG configuration to indicate that the CG is to be kept active/alive (e.g., kept available, or maintained) when the UE enters into RRC_INACTIVE state. In this case, the CG configuration may include at least one of the following:
- a keeping-alive indication when UE get into RRC_INACTIVE state;
- a beam-switching indication for the CG;
- Information on one or more associated SRS resource sets, which could be either one or more new SRS resource set configurations, or one or more IDs of already-configured SRS resource sets;
- a beam-switching RSSI threshold;
- a beam-switching RSRP threshold; or
- a beam-switching RSRQ threshold.

In some embodiments, a list of keeping-alive CG index may be contained in the SuspendConfig IE in the RRCRelease message for instance, which is used by the gNB to direct the UE get into RRC_INACTIVE state. In this case, the SuspendConfig IE may contain at least one of the following:
- a list of keeping-alive CG index;
- a beam-switching indication for each CG in the above list;
- information on one or more associated SRS resource sets for each CG in the above list, which could be either one or more new SRS resource set configurations, or one or more IDs of already-configured SRS resource sets;
- the associated RSSI threshold for beam switching in each CG in the above list;
- the associated RSRP threshold for beam switching in each CG in the above list; or
- the associated RSRQ threshold for beam switching in each CG in the above list.

The gNB may detect a poor quality in transmission(s) via the CG received using the original receiving beam (e.g., having a RSSI, RSRP, RSRQ lower than the configured threshold) (615). The gNB may send a SRS-resource activation notification to the UE either via MAC CE or by DCI signaling (620). The SRS-resource activation notification sent via MAC CE or DCI signaling can include information that may include at least one of the following: CG index..

When the SRS-resource activation notification is received, the UE may start to use SRS resources activated (in response to the SRS-resource activation notification) to transmit sounding reference signals in different beam directions, separately (625). Then, the gNB may measure the receiving quality of different beams in the different directions (630). The gNB may indicate the expected UL transmission beam via DCI or MAC CE signaling, similar to the operation in the RRC_Connected mode.

After gNB finds a better UL beam, the gNB may send to the UE a SRI (SRS resource indicator) information for beam switching by MAC CE or DCI (635). The SRI information may include any of the following information:
- CG index;
- SRI for indicating a target UL beam; or
- Time info for beam switching.
The CG index may be used to identify a CG in a plurality of CGs. The SRI (SRS resource indicator) may be used to indicate the target UL beam which is used in the transmission of the indicated SRS resource. The time information may define or specify the detailed time when the beam switching is to be performed or initiated. The defined time may correspond to an time offset from the current TTI, CG occasion, subframe, slot, or minislot when the MAC CE or DCI is received. The time offset may be in the unit of TTI, CG period, subframe, frame, slot, or minislot.

In some embodiments, after UE receives the SRI information for beam switching, the UE may send a confirmation message to the gNB (640). The confirmation message may include one of the following information:
- CG index;
- SRI for indicating the target UL beam; or
- Time info for beam switching.

The UE may switch UL transmission beam according to gNB's notification from (635) (or the confirmation information sent by the UE from (640)) for the CG indicated by the CG index (645). In some embodiments, the gNB may also adjust its receiving beam correspondingly (650). After beam switching finished, the gNB may send a SRS-resource deactivation notification to UE either by MAC CE or by DCI (655). The SRS-resource deactivation notification may include at least one of the following: CG index.

### C. Process for Performing Beam-Switching for User Equipment in Inactive State Using Configuration Grants (CGs)

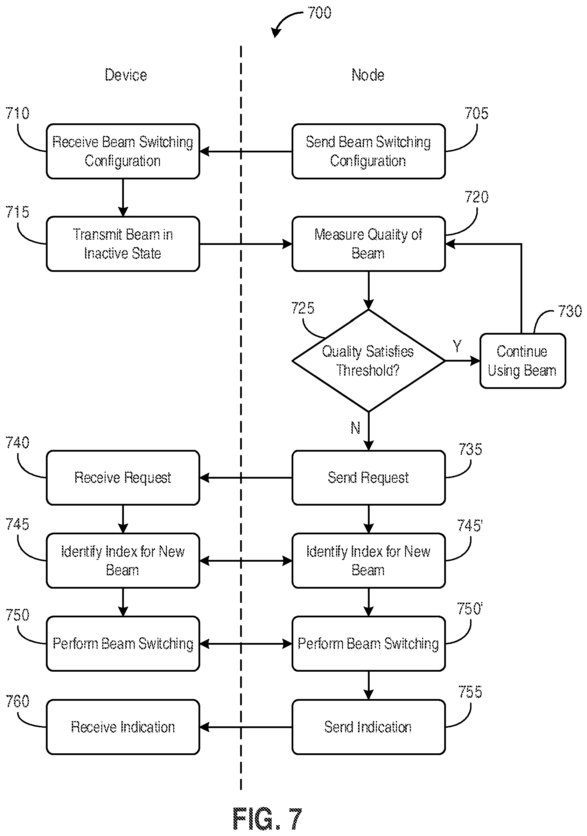

Referring now to FIG. 7, depicted is a functional band diagram of a method 700 of performing beam-switching for user equipment in an inactive state using configured grants. The method 700 may be performed using any of the components detailed herein, such as the user equipment 104 or the base station 102. In brief overview, a wireless communication node may send a beam switching configuration for a configuration grant (705). A wireless communication device may receive the beam switching configuration for the configured grant (710). The wireless communication device may initiate transmission of beam while in inactive state (715). The wireless communication node may identify a quality of beam (720). The wireless communication node may determine whether the quality of beam satisfies a threshold (725). When the quality of beam satisfies the threshold, the wireless communication node may continue using the beam (730). Otherwise, when the quality of beam does not satisfy the threshold, the wireless communication node may send a request (735). The wireless communication device may receive the request (740). An index for the new beam may be identified (745 or 745'). Beam switching may be performed (750 or 750'). The wireless communication node may send an indication (755). The wireless communication device may receive the indication (760).

In further detail, a wireless communication node (e.g., the base station 102 or gNB) may provide, provide, or otherwise send a beam switching configuration for a configuration grant (CG) to a wireless communication device (e.g., the UE 104) (705). The beam switching configuration may define or specify one or more parameters for forming, steering, or otherwise managing beams in accordance with one or more CGs at the wireless communication device when in an inactive state. Each CG may correspond to at least one beam for communications between the wireless communication node and the wireless communication device.

The beam switching configuration for the CG may be generated by the wireless communication node and sent as a radio resource control (RRC) signal (e.g., a RRC connection reconfiguration). The RRC signal may specify or direct the wireless communication device to enter the RRC inactive state. In some embodiments, the wireless communication node may send the beam switching configuration via an RRC message. The RRC message may include one or more parameters to define or specify the beam switching configuration for the beam configuration. In some embodiments, the wireless communication node may send the beam switching configuration via an information element (IE) for the CG configuration in the RRC message. The information element may define, indicate, or otherwise include one or more parameters for the beam configuration.

In some embodiments, the configuration grant may be without any associated sounding reference signal (SRS) resource configured by the RRC. The beam switching configuration may be defined without any associated SRS resources. The beam switching configuration may define, specify, or otherwise include an indication to support beam switching for the wireless communication device. The indication may be for each individual CG at the wireless communication device or for all the CGs at the wireless communication device. The beam switching configuration may define, specify, or otherwise include an indication to maintain one or more of the CGs at the wireless communication device while in (or after entering) the RRC inactive state. The indication may be to specify individual CGs to be maintained or for all the CGs at the wireless communication device. In some embodiments, the beam switching configuration may define, specify, or otherwise include a threshold for triggering/determining beam switching for one or more of the CGs at the wireless communication device. The thresholds may be specified for each CG individually or for all the CGs at the wireless communication device. The thresholds may be in terms of received signal strength indicator (RSSI), reference signal received power (RSRP), reference signal received quality (RSRQ), and signal to noise and interference ratio (SINR), among others.

In some embodiments, the configuration grant may associated with one or more SRS resources configured by the RRC. The beam switching configuration may be defined with reference to one or more SRS resources. The beam switching configuration may include the one or more indicators as discussed above in the configuration without any associated SRS resources, such as: the indication to support beam switching for the wireless communication device; and indication to maintain one or more of the CGs at the wireless communication device after entering and/or while in the RRC inactive state, among others. In addition, the beam switching configuration may define, specify, or otherwise include a configuration for the SRS to be used at the wireless communication device in connected mode while performing beam switching. The configuration may define, include, or otherwise contain information on one or more sets of SRS resources. The information may be defined for individual CGs or for all the CGS at the wireless communication device. In some embodiments, the beam switching configuration may define, specify, or otherwise include one or more thresholds for the beam switching for one or more of the CGs at the wireless communication device. The thresholds may be specified for each CG individually or for all the CGs at the wireless communication device. The thresholds may be in terms of RSSI, RSRP, RSRQ, and SINR, among others.

The wireless communication device may identify or receive the beam switching configuration for the configuration grant from the wireless communication node (710). As discussed above, the beam switching configuration for the CG may be generated by the wireless communication node and sent as a radio resource control (RRC) signal (e.g., a RRC connection reconfiguration). In some embodiments, the wireless communication device may receive the beam switching configuration via an RRC message from the wireless communication node. In some embodiments, the wireless communication device may receive the beam switching configuration via an information element (IE) for the CG configuration in the RRC message from the wireless communication node. Upon receipt, the wireless communication device may parse the RRC message to identify the beam switching configuration for the CGs.

The wireless communication device may initiate transmission of beam while in inactive state (715). From the parsing receipt, the wireless communication device may identify the one or more indicators for the beam switching configuration of the CGs at the wireless communication device. In some embodiments, the wireless communication device may also identify the configuration for the SRS and information on sets of SRS resources from the beam switching configuration. In some embodiments, the wireless communication device may identify the thresholds for beam switching at the CGs from the beam switching configuration. In accordance with (or some period of time after receiving) the beam switching configuration, the wireless communication device may enter the RRC inactive state. The wireless communication device may also configure each CG to transmit the beam to the wireless communication node. The wireless communication device may use the CG in uplink (UL) data transmission to the wireless communication node.

The wireless communication node may identify, detect, or measure a quality of a beam (720). Upon transmitting the RRC message, the wireless communication node may monitor for beams (e.g., UL data transmissions) from the wireless communication device. Upon detecting or receipt of the beam from the wireless communication device, the wireless communication node may determine the quality of the beam. The quality of the beam may be in terms of RSSI, RSRP, RSRQ, and SINR to compare against the threshold. In some embodiments, the wireless communication node may determine the quality of beam at each individual CG at the wireless communication device.

The wireless communication node may determine whether the quality of beam satisfies the threshold (725). In determining, the wireless communication node may identify, calculate, or otherwise determine the threshold for the beam switching. The threshold may be used to compare against the quality of the beam (e.g., the UL data transmission), and may delineate a value for the quality at which to either maintain or initiate beam switching. To determine whether the quality of beam is adequate or acceptable, the wireless communication node may identify the threshold(s) from the beam switching configuration for the CGs at the wireless communication device. With the determination or identification of a corresponding threshold, the wireless communication node may compare the quality of the beam with the corresponding threshold for the beam switching at the respective CG. Based on the comparison, the wireless communication node may identify, determine, or otherwise detect that the quality of the beam is below threshold or greater than or equal to the threshold.

When the quality of beam satisfies (e.g., greater than or equal to) the threshold, the wireless communication node may continue using the beam (730). In some embodiments, the wireless communication node may transmit, provide, or otherwise send a notification (e.g., good-receiving-equality notification) to the wireless communication device. The notification may include or identify an indication that the beam is of good or satisfactory quality. The notification may indicate or signal to the wireless communication device to continue or keep using the beam. In addition, the notification may identify or include a CG index indicating which CG at the wireless communication device is associated with the beam determined to have quality above the threshold. The notification may be transmitted by the wireless communication node to the wireless communication device via a media access control (MAC) control element (CE) or via downlink control information (DCI).

Otherwise, when the quality of beam does not (e.g., less than) satisfy the threshold, the wireless communication node may transmit, provide, or otherwise send a request (735). The request (sometimes referred herein as a bad receiving-quality notification) may signal, trigger, or direct the wireless communication device to perform beam switching. The request may identify or include an indication that the beam is of bad or unsatisfactory quality (e.g., below the corresponding threshold). In some embodiments, the request may identify or include a CG index indicating which CG at the wireless communication device is associated with the beam determined to have a transmission quality below the threshold. In some embodiments, the wireless communication node may send a request to activate one or more SRS resources at the wireless communication device that is in the RRC inactive state. The request to activate (sometimes referred herein as a notification to activate) may be sent by the wireless communication node to the wireless communication device when the quality of beam does not satisfy the threshold. The request to activate may signal, trigger, or direct the wireless communication device to transmit SRSs in different beam directions to perform beam switching. The request to activate may also identify or include the CG index indicating which CG at the wireless communication device is associated with the beam determined to have the quality below the threshold. The request (to perform beam switching or activate SRS resources) may be transmitted by the wireless communication node to the wireless communication device via a MAC CE or via DCI.

The wireless communication device may identify or receive the request from the wireless communication node (740). When the quality of the beam is determined to be below the threshold, the wireless communication device may receive the request to perform beam switching from the wireless communication device. In some embodiments, the wireless communication device may receive the request to activate one or more SRS resources from the wireless communication node. In some embodiments, the wireless communication device may receive the request to activate when the quality of beam sent via the corresponding CG is below the threshold. The request (to perform beam switching or activate SRS resources) may be received by the wireless communication device as a MAC CE or via DCI.

An index for the new beam may be determined, found, or otherwise identified by the wireless communication device (745) or by the wireless communication node (745'). The index may be identified in accordance with the request. When the request is to perform beam switching, the wireless communication device may initiate to perform beam switching. The wireless communication device may identify, determine, or measure quality of each of the synchronization signal blocks (SSBs) in different DL beams. The quality may be in terms of RSSI, RSRP, or RSRQ, among others. With the measurement, the wireless communication device may identify one or more SSBs having the best quality (e.g., highest quality) from the set of SSBs. In some embodiments, the wireless communication device may determine or identify time information to initiate the beam switching (e.g., for UL data transmissions). The time information may indicate a CG period, frame, slot, or mini-slot for the new beams applied for the beam switching.

Prior to performing beam switching, the wireless communication device may transmit, provide, or otherwise send at least one of the indication of the SSB(s) identified as having best quality and the time information. The wireless communication node may in turn identify or receive the indication of the SSB(s) and the time information for performing the beam switching from the wireless communication device. In some embodiments, the wireless communication node may transmit, provide, or otherwise send a confirmation in response to the indication of the SSB(s) to the wireless communication device. The confirmation may indicate that the wireless communication device is to initiate beam switching using the SSB(s) in the indication. The wireless communication device may in turn receive the confirmation from the wireless communication node.

When the request is to activate SRS resources, the wireless communication device may transmit, provide, or otherwise send the set of SRSes to the wireless communication node. Each SRS may be transmitted in different beam directions. The wireless communication node may in turn identify, measure and/or receive the set of SRSes from the wireless communication device. Upon receipt, the wireless communication node may identify, determine, or measure the receiving quality of each beam transmitted by the wireless communication device. The quality may be in terms of RSSI, RSRP, or RSRQ, among others. In some embodiments, the wireless communication device may be in the RRC connected mode during the measurement of the quality of the beams. With the measurements, the wireless communication node may identify one or more SRSes having the best quality (e.g., highest quality) from the set of SRSes.

The wireless communication node may transmit, provide, or otherwise send an indication of SRS(es) (e.g., using a SRI) identified as having the best quality to the wireless communication device. The wireless communication device may identify or receive the indication of SRSes from the wireless communication node. Upon receipt, the wireless communication device may determine or identify time information to initiate the beam switching (e.g., for UL data transmissions). The time information may indicate a CG period, frame, slot, or mini-slot for the new beams applied for the beam switching. In some embodiments, the wireless communication device may transmit, provide, or send a confirmation for the indication of the SRS(es) to the wireless communication node. The confirmation may indicate or signal to the wireless communication node that the wireless communication device is to initiate beam switching. The wireless communication node may in turn identify or receive the confirmation for the indication of SRS(es) from the wireless communication device.

Beam switching may be performed by the wireless communication device (750) or by the wireless communication node (750'). The wireless communication device may be still in the RRC inactive state. When in the RRC inactive state, the wireless communication device may perform beam switching via the CG with the wireless communication node. In some embodiments, the beam switching may be in accordance with SSB(es) identified as having the best quality. To perform the beam switching, the wireless communication device may transmit or send UL data to the wireless communication node. The UL data may be transmitted by the wireless communication device via the CG using a new transmission beam that corresponds to the indication of the SSB identified as having the best quality. The new transmission beam may be generated and transmitted in accordance with the SSB in the indication and time information. The wireless communication node may in turn identify or receive the UL data from the wireless communication device. The wireless communication device may communicate with the wireless communication node via the CG using the new transmission beam.

In some embodiments, the beam switching performed by the wireless communication device may be in accordance with the SRS(es) identified as having the best quality. The wireless communication device may transmit or send the UL data to the wireless communication node. The UL data may be transmitted by the wireless communication node via the CG using a new transmission beam that corresponds to the indication of the SRS identified as having the best quality. The new transmission beam may be generated and transmitted in accordance with the SRS in the indication and the time information. The wireless communication node may in turn identify or receive the UL data from the wireless communication device. The wireless communication device may communicate with the wireless communication node via the CG using the new transmission beam.

The wireless communication node may transmit, provide, or send an indication (755). In performing the beam switching, the wireless communication node may identify, determine, or measure the quality of the new beam transmission via the respective CG from the wireless communication device in a similar manner as discussed above in (720). The quality of the beam may be in terms of RSSI, RSRP, RSRQ, and SINR to compare against the threshold. With the measurement of the quality of the new beam transmission, the wireless communication node may compare the quality of the beam against the threshold from the beam switching configuration for the CG.

Based on the comparison, the wireless communication node may generate the indication. In some embodiments, the generation of the indication may also be based on whether SRS was relied on for beam switching. When the quality of beam satisfies the threshold, the wireless communication node may generate and send the indication to keep the new beam. The indication may also identify or include another indication that the quality of the new beam satisfies the threshold. When SRS was used to perform beam switching, the wireless communication node may generate and send a message (or indication) to deactivate the SRS at the wireless communication device. In some embodiments, the message may also indicate or signal the wireless communication device to change from RRC connected mode to the RRC inactive state. The wireless communication node may send the message to deactivate when the quality of beam received via the CG is determined to satisfy (e.g., higher) than the threshold. When the quality of beam does not satisfy the threshold, the wireless communication node and the wireless communication device may repeat the functionality/operations of (735)-(750').

The wireless communication device may identify or receive the indication from the wireless communication node (760). In some embodiments, the wireless communication device may in turn receive the indication to keep the new beam when the quality of new beam satisfies (e.g., higher than) the threshold for beam switching. Upon receipt, the wireless communication device may parse to identify the indication to keep the new beam. Based on the identification, the wireless communication device may continue to use the beam via the CG for UL transmission with the wireless communication node. The wireless communication device may also transmit, provide, or send a confirmation in response to the indication to the wireless communication node. The confirmation may indicate that the wireless communication device is to continue using the beam. The wireless communication node may in turn identify or receive the confirmation transmitted by the wireless communication device.

In some embodiments, the wireless communication device may in turn identify or receive the message to deactivate from the wireless communication node. The receipt of the message to deactivate may be received when the quality of the new beam sent via the CG is determined to satisfy (e.g., higher than) the threshold. Upon receipt, the wireless communication device may parse the message. In response, the wireless communication device may deactivate the SRS (e.g., transmissions of SRSes). In some embodiments, the wireless communication device may revert to the RRC inactivate state. The wireless communication device may also transmit, provide, or send a confirmation in response to the message to the wireless communication node. The confirmation may indicate that the wireless communication device has deactivated the SRS(es). The wireless communication node in turn may receive the confirmation from the wireless communication device.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the embodiments described in this disclosure will be readily apparent to those skilled in the art. Thus, the disclosure is not intended to be limited to the embodiments shown herein, but is to be accorded the widest scope consistent with the novel and inventive features disclosed herein, as recited in the claims below.

## Claims

1. A method, comprising:
sending, by a wireless communication node, a beam switching configuration for a configured grant to a wireless communication device;
determining, by the wireless communication node, a threshold for beam switching; and
detecting, by the wireless communication node when the wireless communication device is in a radio resource control, RRC, inactive state, that a quality of a beam received via the configured grant is below the threshold.

2. The method of claim 1, wherein the beam switching configuration comprises at least one of:
an indication to support beam switching for each of a plurality of configured grants or for the plurality of configured grants at the wireless communication device;
an indication to maintain each of the plurality of configured grants or the plurality of configured grants at the wireless communication device when the wireless communication device is in the RRC inactive state, or
the threshold for the beam switching for each of the plurality of configured grants or for the plurality of configured grants at the wireless communication device.

3. The method of claim 1, comprising sending, by the wireless communication node, the beam switching configuration to the wireless communication device via at least a RRC message or an information element, IE, for a configured grant configuration in a RRC message.

4. The method of claim 1, comprising sending, by the wireless communication node responsive to the quality of the beam being below the threshold, a request to the wireless communication device to perform beam switching.

5. The method of claim 4, wherein the request to perform beam switching comprises an indication that the quality of the beam is below the threshold.

6. The method of claim 1, comprising receiving, by the wireless communication node from the wireless communication device, at least one of: an indication of a synchronization signal block, SSB, having best quality amongst a plurality of SSBs, or time information for the wireless communication device to perform the beam switching.

7. The method of claim 6, comprising:
sending, by the wireless communication node to the wireless communication device, a confirmation in response to the received indication of the SSB having the best quality; and
receiving, by the wireless communication node, uplink data via the configured grant using a new receiving beam corresponding to the received indication of the SSB having the best quality.

8. The method of claim 1, comprising sending, by the wireless communication node responsive to the quality of the new beam satisfying the threshold, an indication to keep the new beam.

9. The method of claim 8,
wherein the indication to keep the new beam comprises an indication that the quality of the new beam satisfies the threshold; or
comprising receiving, by the wireless communication node from the wireless communication device, a confirmation in response to the indication to keep the new beam.

10. The method of claim 1, wherein the beam switching configuration comprises at least one of:
an indication to support beam switching for each of a plurality of configured grants or for the plurality of configured grants at the wireless communication device,
a configuration for sounding reference signal, SRS, containing at least information on one or more sets of SRS resources, for each of the plurality of configured grants or for the plurality of configured grants at the wireless communication device,
an indication to maintain each of the plurality of configured grants, or the plurality of configured grants at the wireless communication device, when the wireless communication device is in the RRC inactive state, or
a threshold for the beam switching for each of the plurality of configured grants or for the plurality of configured grants at the wireless communication device.

11. The method of claim 10,
comprising sending, by the wireless communication node to the wireless communication device, a request for activation of a plurality of SRS resources at the wireless communication device that is in inactive state; and
comprising sending, by the wireless communication node to the wireless communication device, the request in response to the quality of the beam received via the configured grant being below the threshold; and
comprising:
receiving, by the wireless communication node from the wireless communication device, the plurality of SRSes;
sending, by the wireless communication node to the wireless communication device when the wireless communication device is in the RRC inactive state, an indication of a SRS having best quality amongst the plurality of SRSes; and
comprising: receiving, by the wireless communication node from the wireless communication device, a confirmation for the indication of the SRS having the best quality.

12. The method of claim 10,
comprising sending, by the wireless communication node to the wireless communication device, a message to deactivate SRS at the wireless communication device which is in inactive state; and
comprising sending, by the wireless communication node to the wireless communication device, the message to deactivate SRS, in response to a quality of a new beam received via the configured grant being higher than the threshold; or
comprising receiving, by the wireless communication node from the wireless communication device, a confirmation in response to the message to deactivate SRS.

13. A method, comprising:
receiving, by a wireless communication device from a wireless communication node, a beam switching configuration for a configured grant,
wherein the wireless communication node determines a threshold for beam switching, and detects, when the wireless communication device is in a radio resource control (RRC) inactive state, that a quality of a beam received via the configured grant is below the threshold.

14. A wireless communication node, comprising:
at least one processor configured to:
send, via a transmitter, a beam switching configuration for a configured grant to a wireless communication device;
determine a threshold for beam switching; and
detect, when the wireless communication device is in a radio resource control, RRC, inactive state, that a quality of a beam received via the configured grant is below the threshold.

15. A wireless communication device, comprising:
at least one processor configured to:
receive, via a receiver from a wireless communication node, a beam switching configuration for a configured grant,
cause the wireless communication node to determine, in response to receiving the beam switching configuration, a threshold for beam switching, and detect, when the wireless communication device is in a radio resource control, RRC, inactive state, that a quality of a beam received via the configured grant is below the threshold.

## Patentansprüche

1. Verfahren, aufweisend:
Senden, durch einen Drahtloskommunikationsknoten, einer Strahlumschaltungskonfiguration für eine konfigurierte Berechtigung an eine Drahtloskommunikationsvorrichtung;
Bestimmen, durch den Drahtloskommunikationsknoten, eines Schwellenwerts für die Strahlumschaltung; und
Erkennen, durch den Drahtloskommunikationsknoten, wenn die Drahtloskommunikationsvorrichtung in einem inaktiven Zustand einer Funkressourcensteuerung, RRC, ist, dass eine Qualität eines Strahls, der über die konfigurierte Berechtigung empfangen wird, unter dem Schwellenwert liegt.

2. Verfahren nach Anspruch 1, wobei die Strahlumschaltungskonfiguration mindestens eines aufweist von:
einer Angabe, um die Strahlumschaltung für jede von mehreren konfigurierten Berechtigungen oder für die mehreren konfigurierten Berechtigungen an der Drahtloskommunikationsvorrichtung zu unterstützen;
einer Angabe, um jede der mehreren konfigurierten Berechtigungen oder die mehreren konfigurierten Berechtigungen an der Drahtloskommunikationsvorrichtung aufrechtzuerhalten, wenn die Drahtloskommunikationsvorrichtung in dem inaktiven Zustand der RRC ist, oder
dem Schwellenwert für die Strahlumschaltung für jede der mehreren konfigurierten Berechtigungen oder für die mehreren konfigurierten Berechtigungen an der Drahtloskommunikationsvorrichtung.

3. Verfahren nach Anspruch 1, aufweisend das Senden, durch den Drahtloskommunikationsknoten, der Strahlumschaltungskonfiguration an die Drahtloskommunikationsvorrichtung über mindestens eine RRC-Nachricht oder ein Informationselement, IE, für eine konfigurierte Berechtigungskonfiguration in einer RRC-Nachricht.

4. Verfahren nach Anspruch 1, aufweisend das Senden, durch den Drahtloskommunikationsknoten als Reaktion darauf, dass die Qualität des Strahls unter dem Schwellenwert liegt, einer Anforderung an die Drahtloskommunikationsvorrichtung, die Strahlumschaltung durchzuführen.

5. Verfahren nach Anspruch 4, wobei die Anforderung, die Strahlumschaltung durchzuführen, eine Angabe aufweist, dass die Qualität des Strahls unterhalb des Schwellenwerts liegt.

6. Verfahren nach Anspruch 1, aufweisend das Empfangen, durch den Drahtloskommunikationsknoten von der Drahtloskommunikationsvorrichtung, von mindestens einem von: einer Angabe eines Synchronisationssignalblocks, SSB, der die beste Qualität unter mehreren SSBs hat, oder Zeitinformationen für die Drahtloskommunikationsvorrichtung, um die Strahlumschaltung durchzuführen.

7. Verfahren nach Anspruch 6, aufweisend:
Senden, durch den Drahtloskommunikationsknoten an die Drahtloskommunikationsvorrichtung, einer Bestätigung als Reaktion auf die empfangene Angabe, dass der SSB die beste Qualität hat; und
Empfangen, durch den Drahtloskommunikationsknoten, von Uplink-Daten über die konfigurierte Berechtigung unter Verwendung eines neuen Empfangsstrahls, der der empfangenen Angabe des SSB, der die beste Qualität hat, entspricht.

8. Verfahren nach Anspruch 1, aufweisend das Senden, durch den Drahtloskommunikationsknoten als Reaktion auf die Qualität des neuen Strahls, die den Schwellenwert erfüllt, einer Angabe, den neuen Strahl beizubehalten.

9. Verfahren nach Anspruch 8,
wobei die Angabe, den neuen Strahl beizubehalten, eine Angabe, dass die Qualität des neuen Strahls den Schwellenwert erfüllt, aufweist; oder
aufweisend das Empfangen, durch den Drahtloskommunikationsknoten von der Drahtloskommunikationsvorrichtung, einer Bestätigung als Reaktion auf die Angabe, den neuen Strahl beizubehalten.

10. Verfahren nach Anspruch 1, wobei die Strahlumschaltungskonfiguration mindestens eines aufweist von:
einer Angabe, um die Strahlumschaltung für jede von mehreren konfigurierten Berechtigungen oder für die mehreren konfigurierten Berechtigungen an der Drahtloskommunikationsvorrichtung zu unterstützen;
einer Konfiguration für ein Sounding-Reference-Signal, SRS, das mindestens Informationen über einen oder mehrere Sätze von SRS-Ressourcen enthält, für jede der mehreren konfigurierten Berechtigungen oder für die mehreren konfigurierten Berechtigungen an der Drahtloskommunikationsvorrichtung,
einer Angabe, um jede der mehreren konfigurierten Berechtigungen oder die mehreren konfigurierten Berechtigungen an der Drahtloskommunikationsvorrichtung aufrechtzuerhalten, wenn die Drahtloskommunikationsvorrichtung in dem inaktiven Zustand der RRC ist, oder
einem Schwellenwert für die Strahlumschaltung für jede der mehreren konfigurierten Berechtigungen oder für die mehreren konfigurierten Berechtigungen an der Drahtloskommunikationsvorrichtung.

11. Verfahren nach Anspruch 10,
aufweisend das Senden, durch den Drahtloskommunikationsknoten an die Drahtloskommunikationsvorrichtung, einer Anforderung für eine Aktivierung mehrerer SRS-Ressourcen an der Drahtloskommunikationsvorrichtung, die in dem inaktiven Zustand ist; und
aufweisend das Senden, durch den Drahtloskommunikationsknoten an die Drahtloskommunikationsvorrichtung, der Anforderung als Reaktion darauf, dass die Qualität des Strahls, der über die konfigurierte Berechtigung empfangen wird, unter dem Schwellenwert liegt; und
aufweisend:
Empfangen, durch den Drahtloskommunikationsknoten von der Drahtloskommunikationsvorrichtung, der mehreren SRSs;
Senden, durch den Drahtloskommunikationsknoten an die Drahtloskommunikationsvorrichtung, wenn die Drahtloskommunikationsvorrichtung in dem inaktiven Zustand der RRC ist, einer Angabe eines SRS, das die beste Qualität unter den mehreren SRSs hat; und
aufweisend: Empfangen, durch den Drahtloskommunikationsknoten von der Drahtloskommunikationsvorrichtung, einer Bestätigung für die Angabe des SRS, das die beste Qualität hat.

12. Verfahren nach Anspruch 10,
aufweisend das Senden, durch den Drahtloskommunikationsknoten an die Drahtloskommunikationsvorrichtung, einer Nachricht, das SRS an der Drahtloskommunikationsvorrichtung, die in dem inaktiven Zustand ist, zu deaktivieren; und
aufweisend das Senden, durch den Drahtloskommunikationsknoten an die Drahtloskommunikationsvorrichtung, der Nachricht, das SRS zu deaktivieren, als Reaktion darauf, dass eine Qualität eines neuen Strahls, der über die konfigurierte Berechtigung empfangen wird, höher ist als der Schwellenwert; oder
aufweisend das Empfangen, durch den Drahtloskommunikationsknoten von der Drahtloskommunikationsvorrichtung, einer Bestätigung als Reaktion auf die Nachricht, das SRS zu deaktivieren.

13. Verfahren, aufweisend:
Empfangen, durch eine Drahtloskommunikationsvorrichtung von einem Drahtloskommunikationsknoten, einer Strahlumschaltungskonfiguration für eine konfigurierte Berechtigung,
wobei der Drahtloskommunikationsknoten einen Schwellenwert für die Strahlumschaltung bestimmt und erkennt, wenn die Drahtloskommunikationsvorrichtung in einem inaktiven Zustand der Funkressourcensteuerung (RRC) ist, dass eine Qualität eines Strahls, der über die konfigurierte Berechtigung empfangen wird, unter dem Schwellenwert liegt.

14. Drahtloskommunikationsknoten, aufweisend:
mindestens einen Prozessor, der konfiguriert ist zum:
Senden, über eine Übertragungseinrichtung, einer Strahlumschaltungskonfiguration für eine konfigurierte Berechtigung an eine Drahtloskommunikationsvorrichtung;
Bestimmen eines Schwellenwerts für die Strahlumschaltung; und
Erkennen, wenn die Drahtloskommunikationsvorrichtung in einem inaktiven Zustand einer Funkressourcensteuerung, RRC, ist, dass eine Qualität eines Strahls, der über die konfigurierte Berechtigung empfangen wird, unter dem Schwellenwert liegt.

15. Drahtloskommunikationsvorrichtung, aufweisend:
mindestens einen Prozessor, der konfiguriert ist zum:
Empfangen, über einen Empfänger von einem Drahtloskommunikationsknoten, einer Strahlumschaltungskonfiguration für eine konfigurierte Berechtigung,
Veranlassen des Drahtloskommunikationsknotens, als Reaktion auf das Empfangen der Strahlumschaltungskonfiguration, einen Schwellenwert für die Strahlumschaltung zu bestimmen und zu erkennen, wenn die Drahtloskommunikationsvorrichtung in einem inaktiven Zustand einer Funkressourcensteuerung, RRC, ist, dass eine Qualität eines Strahls, der über die konfigurierte Berechtigung empfangen wird, unter dem Schwellenwert liegt.

## Revendications

1. Procédé, comprenant :
l'envoi, par un nœud de communication sans fil, d'une configuration de commutation de faisceau pour une autorisation configurée à un dispositif de communication sans fil ;
la détermination, par le nœud de communication sans fil, d'un seuil pour une commutation de faisceau ; et
le fait de détecter, par le nœud de communication sans fil lorsque le dispositif de communication sans fil est dans un état inactif de commande de ressources radio, RRC, qu'une qualité d'un faisceau reçu par l'intermédiaire de l'autorisation configurée est inférieure au seuil.

2. Procédé selon la revendication 1, dans lequel la configuration de commutation de faisceau comprend au moins l'un parmi :
une indication de prise en charge d'une commutation de faisceau pour chacune parmi une pluralité d'autorisations configurées ou pour la pluralité d'autorisations configurées au niveau du dispositif de communication sans fil ;
une indication de maintien de chacune parmi la pluralité d'autorisations configurées ou de la pluralité d'autorisations configurées au niveau du dispositif de communication sans fil lorsque le dispositif de communication sans fil est dans l'état inactif RRC, ou
le seuil pour la commutation de faisceau pour chacune parmi la pluralité d'autorisations configurées ou pour la pluralité d'autorisations configurées au niveau du dispositif de communication sans fil.

3. Procédé selon la revendication 1, comprenant l'envoi, par le nœud de communication sans fil, de la configuration de commutation de faisceau au dispositif de communication sans fil par l'intermédiaire d'au moins un message RRC ou d'un élément d'informations, lE, pour une configuration d'autorisation configurée dans un message RRC.

4. Procédé selon la revendication 1, comprenant l'envoi, par le nœud de communication sans fil, en réponse au fait que la qualité du faisceau est inférieure au seuil, d'une demande au dispositif de communication sans fil pour effectuer une commutation de faisceau.

5. Procédé selon la revendication 4, dans lequel la demande pour effectuer une commutation de faisceau comprend une indication selon laquelle la qualité du faisceau est inférieure au seuil.

6. Procédé selon la revendication 1, comprenant la réception, par le nœud de communication sans fil à partir du dispositif de communication sans fil, d'au moins l'une parmi : une indication d'un bloc de signal de synchronisation, SSB, ayant la meilleure qualité parmi une pluralité de SSB, ou des informations temporelles permettant au dispositif de communication sans fil d'effectuer la commutation de faisceau.

7. Procédé selon la revendication 6, comprenant :
l'envoi, par le nœud de communication sans fil au dispositif de communication sans fil, d'une confirmation en réponse à l'indication reçue selon laquelle le SSB a la meilleure qualité ; et
la réception, par le nœud de communication sans fil, de données de liaison montante par l'intermédiaire de l'autorisation configurée à l'aide d'un nouveau faisceau de réception correspondant à l'indication reçue selon laquelle le SSB a la meilleure qualité.

8. Procédé selon la revendication 1, comprenant l'envoi, par le nœud de communication sans fil, en réponse au fait que la qualité du nouveau faisceau satisfait au seuil, d'une indication de conservation du nouveau faisceau.

9. Procédé selon la revendication 8,
dans lequel l'indication de conservation du nouveau faisceau comprend une indication selon laquelle la qualité du nouveau faisceau satisfait au seuil ; ou
comprenant la réception, par le nœud de communication sans fil à partir du dispositif de communication sans fil, d'une confirmation en réponse à l'indication de conservation du nouveau faisceau.

10. Procédé selon la revendication 1, dans lequel la configuration de commutation de faisceau comprend au moins l'un parmi :
une indication de prise en charge d'une commutation de faisceau pour chacune parmi une pluralité d'autorisations configurées ou pour la pluralité d'autorisations configurées au niveau du dispositif de communication sans fil,
une configuration pour un signal de référence de sondage, SRS, contenant au moins des informations sur un ou plusieurs ensembles de ressources SRS, pour chacune parmi la pluralité d'autorisations configurées ou pour la pluralité d'autorisations configurées au niveau du dispositif de communication sans fil,
une indication de maintien de chacune parmi la pluralité d'autorisations configurées, ou de la pluralité d'autorisations configurées au niveau du dispositif de communication sans fil, lorsque le dispositif de communication sans fil est dans l'état inactif RRC, ou
un seuil pour la commutation de faisceau pour chacune parmi la pluralité d'autorisations configurées ou pour la pluralité d'autorisations configurées au niveau du dispositif de communication sans fil.

11. Procédé selon la revendication 10,
comprenant l'envoi, par le nœud de communication sans fil au dispositif de communication sans fil, d'une demande d'activation d'une pluralité de ressources SRS au niveau du dispositif de communication sans fil qui est dans un état inactif ; et
comprenant l'envoi, par le nœud de communication sans fil au dispositif de communication sans fil, de la demande en réponse au fait que la qualité du faisceau reçu par l'intermédiaire de l'autorisation configurée est inférieure au seuil ; et
comprenant :
la réception, par le nœud de communication sans fil à partir du dispositif de communication sans fil, de la pluralité de SRS ;
l'envoi, par le nœud de communication sans fil au dispositif de communication sans fil lorsque le dispositif de communication sans fil est dans l'état inactif RRC, d'une indication d'un SRS ayant la meilleure qualité parmi la pluralité de SRS ; et
comprenant : la réception, par le nœud de communication sans fil à partir du dispositif de communication sans fil, d'une confirmation pour l'indication du SRS ayant la meilleure qualité.

12. Procédé selon la revendication 10,
comprenant l'envoi, par le nœud de communication sans fil au dispositif de communication sans fil, d'un message de désactivation du SRS au niveau du dispositif de communication sans fil qui est dans un état inactif ; et
comprenant l'envoi, par le nœud de communication sans fil au dispositif de communication sans fil, du message de désactivation du SRS, en réponse au fait qu'une qualité d'un nouveau faisceau reçu par l'intermédiaire de l'autorisation configurée est supérieure au seuil ; ou
comprenant la réception, par le nœud de communication sans fil à partir du dispositif de communication sans fil, d'une confirmation en réponse au message de désactivation du SRS.

13. Procédé, comprenant :
la réception, par un dispositif de communication sans fil à partir d'un nœud de communication sans fil, d'une configuration de commutation de faisceau pour une autorisation configurée,
dans lequel le nœud de communication sans fil détermine un seuil pour une commutation de faisceau, et détecte, lorsque le dispositif de communication sans fil est dans un état inactif de commande de ressources radio (RRC), qu'une qualité d'un faisceau reçu par l'intermédiaire de l'autorisation configuré est inférieure au seuil.

14. Nœud de communication sans fil, comprenant :
au moins un processeur configuré pour :
envoyer, par l'intermédiaire d'un transmetteur, une configuration de commutation de faisceau pour une autorisation configurée à un dispositif de communication sans fil ;
déterminer un seuil pour une commutation de faisceau ; et
détecter, lorsque le dispositif de communication sans fil est dans un état inactif de commande de ressources radio, RRC, qu'une qualité d'un faisceau reçu par l'intermédiaire de l'autorisation configurée est inférieure au seuil.

15. Dispositif de communication sans fil, comprenant :
au moins un processeur configuré pour :
recevoir, par l'intermédiaire d'un récepteur à partir d'un nœud de communication sans fil, une configuration de commutation de faisceau pour une autorisation configurée,
amener le nœud de communication sans fil à déterminer, en réponse à la réception de la configuration de commutation de faisceau, un seuil pour une commutation de faisceau et détecter, lorsque le dispositif de communication sans fil est dans un état inactif de commande de ressources radio, RRC, qu'une qualité d'un faisceau reçu par l'intermédiaire de l'autorisation configurée est inférieure au seuil.
